# EUROPÄISCHE PATENTSCHRIFT

(11) **EP 1 731 033 B1**
(45) Veröffentlichungstag und Bekanntmachung des Hinweises auf die Patenterteilung: **14.11.2007**
(21) Anmeldenummer: 05090164.4
(22) Anmeldetag: 06.06.2005
(51) Int. Cl.: A01M 23/24

(54) **Schlagfalle für kleine Nagetiere, insbesondere für Mäuse und Ratten**
Trap for rodents, in particular for mice and rats
Piège pour rongeurs, en particulier pour souris et rats

(43) Veröffentlichungstag der Anmeldung: 13.12.2006
(73) Patentinhaber: UrbanGuard GmbH, 13465 Berlin (DE)
(72) Erfinder: Wiesener, Bernd, 13465 Berlin (DE); Wiesener, Mark GSG-Ges. für Spezialprodukte mbH, 16567 Mühlenbeck bei Berlin (DE)
(74) Vertreter: Hoffmann, Klaus-Dieter

(56) Entgegenhaltungen:
- EP-A- 0 289 504
- EP-A- 1 011 326
- EP-A- 1 300 077
- DE-A1- 10 036 990
- US-A- 4 711 049

## Beschreibung

### Fachgebiet und Hintergrund der Erfindung

Die Erfindung betrifft eine Schlagfalle für kleine Nagetiere, insbesondere für Mäusen und Ratten, mit einer Grundplatte, die mit einem Behältnis zur Aufnahme eines Köders versehen ist, mit einer Schlageinrichtung, die an der Grundplatte um eine erste Achse schwenkbar gelagert, gegen die Wirkung einer Zugfeder beanspruchbar und aus einer ersten, scharfen Position lösbar ist, wenn ein Tier auf eine Auslöseeinrichtung einwirkt, die dadurch aus einer Ruhestellung um eine zweite, an der Grundplatte gelagerte Achse in eine Auslösestellung schwenkbar ist, in der ein Freigabeelement, das mit der Schlageinrichtung in deren ersten, scharfen Position in Eingriff steht, von der Auslöseeinrichtung derart verschwenkbar ist, daß die um die erste Achse schwenkbare Schlageinrichtung aus ihrer ersten, scharfen Position lösbar ist und durch die Einwirkung der Zugfeder unmittelbar in eine zweite Position schwingt, in der sie das Tier trifft und tötet, wobei die Schlageinrichtung, die sich von der ersten Achse erstreckt, mit einem ersten und einen zweiten Arm versehen ist, ein erster Befestigungspunkt der Zugfeder an dem Ende der Schlageinrichtung vorgesehen ist, das von der ersten Achse des ersten Arms drehbar ist, der zweite Befestigungspunkt der Zugfeder an dem Gestell vorgesehen ist, die Kraftlinie zwischen den beiden Befestigungspunkten der Zugfeder durch die oder in der Nähe der ersten Achse verläuft, wenn die Schlageinrichtung sich in ihrer ersten, scharfen Position befindet, und wobei die Auslöseeinrichtung mindestens in ihrer Ruhestellung die Öffnung des Behältnisses für den Köder umfaßt und zumindest in der Auslösestellung der Auslöseeinrichtung die Öffnung des Behältnisses für den Köder frei zugänglich ist.

Bei einer durch die EP 1011326 B1 bekannten derartigen Schlagfalle ist die Auslöseeinrichtung von einer um die zweite Achse schwenkbaren haubenartige Kappe gebildet, die in Ruhestellung der Auslöseeinrichtung das in der Grundplatte der Falle befindliche Behältnis für den Köder abdeckt. Die Kappe besitzt an ihrer zur ersten Achse entgegengesetzten Stirnseite eine Ausnehmung und an dem zu letzterer gegenüberliegenden Ende einen Armabschnitt, der das Freigabeelement bildet, das mit dem ersten Arm der Schlageinrichtung in deren ersten, scharfen Position in Eingriff steht und die Schlageinrichtung in dieser Position lösbar arretiert. Der zweite Arm der Schlageinrichtung ruht an einem Anschlag ruht, durch den verhindert wird, daß die Schlageinrichtung versehentlich gedreht und die Falle unwirksam wird. In der geladenen Position befindet sich die Schlageinrichtung entgegen der Zugkraft der Zugfeder in Form einer Schraubenfeder, die am zweiten Arm der Schlageinrichtung und am zweiten Ende der Grundplatte befestigt ist.

Um diese bekannte Schlagfalle auszulösen, muß die haubenartige Kappe, die den Köder abdeckt, von ihrer stirnseitigen Ausnehmung aus durch das Tier angehoben werden. Bei dem damit verbundenen Verschwenken der Kappe wirkt das Freigabeelement, das um die erste Achse zusammen mit der Kappe schwenkbar ist, auf den zweiten Arm der Schlageinrichtung derart ein, daß diese durch Einwirkung der Zugfeder in ihre zweite Position schwingt und das Tier trifft und erschlägt. Da jedoch keineswegs sicher ist, ob ein zu fangendes Tier die haubenartige Kappe anhebt, ist die Effizienz dieser Schlagfalle als begrenzt anzusehen. Weiterhin ist ihre Stapelbarkeit durch ihren erhöhten Aufbau am zweiten Ende der Grundplatte nicht gegeben.

Aus der DE 10036990 A1 ist weiterhin eine Mausefalle mit einem an einer Grundplatte angelenktem Schlagdeckel bekannt, der einhergehend mit dem Spannen einer Schlagfeder in eine Fangstellung bringbar ist, und mit einem wippenartig gestalteten Auslöser, der bei geringfügiger Schwenkverlagerung den Schlagdeckel aus der Fangstellung derart freigibt, daß der Schlagdeckel, von der Schlagfeder getrieben, zuschlägt.

### Zusammenfassung der Erfindung

Der Erfindung liegt die Aufgabe zugrunde, eine Schlagfalle der eingangs beschriebenen Art hauptsächlich für den Einsatzbereich privater Haushalte und landwirtschaftlicher Tierhaltung, speziell der Geflügelzucht zur Verfügung zu stellen, die bei hoher Schlagkraft ein effizientes tiergerechtes Töten kleiner Nagetiere, insbesondere von Mäusen und Ratten gewährleistet, wobei die Schlagfalle auch für Ungeübte bequem mit einer Hand bedienbar sein soll. Zudem soll die Schlagfalle einen solchen Aufbau aufweisen, daß sie raumsparend und versandgünstig stapelbar und mit einem geeigneten Gehäuse ausrüstbar ist, das im Vergleich zu Ködergiften Sicherheit für Kinder, Haustiere und Nichtzieltiere bietet, eine umweltgerechte Entsorgung gefangener Tiere bzw. von Tierkadavern gewährleistet und das Randkontaktverhalten von Nagern berücksichtigend unmittelbar an Wänden, insbesondere am Boden bei der Bodentierhaltung arretierbar ist.

Diese Aufgabe wird erfindungsgemäß durch die im Patentanspruch 1 beschriebene Schlagfalle gelöst. Hierbei zeichnet sich die Schlagfalle in erster Linie dadurch aus, daß
- die Auslöseeinrichtung von einer um die zweite Achse der Grundplatte oberhalb letzterer wippenartig drehbaren Platte gebildet ist, die in ihrer Ruhestellung parallel zur Grundplatte angeordnet ist, in Nähe ihres ersten Endes eine die Öffnung des Behältnisses für den Köder der Grundplatte stets zugänglich umfassende Ausnehmung sowie am entgegengesetzten zweiten Ende ein sich von der oberen Fläche der Platte aufwärts erstreckendes Widerlager aufweist,
- das Freigabeelement von einem elastischen Schwungelement gebildet ist, das exzentrisch auf einer dritten Achse an der Grundplatte in Nähe des zweiten Endes der Platte durch sein Schwungmoment in eine Grundstellung drehbeaufschlagt gelagert ist, in der ein Kragen des Schwungelementes mit dem Widerlager der Platte in Eingriff steht und die Schlageinrichtung in ihrer ersten, scharfen Position lösbar am Schwungelement arretiert ist, wobei dritten die Achse zwischen dem ersten Ende der wippenartigen Platte und der ersten Achse und der zweite Befestigungspunkt der Zugfeder an der Grundplatte zwischen der zweiten Achse und dem ersten Ende der Platte vorgesehen sind, so daß bei einer gegen die Grundplatte gerichteten Einwirkung auf das erste Ende der wippenartigen Platte der Kragen des Schwungelementes durch das Widerlager der Platte beaufschlagt und das exzentrisch gelagerte Schwungelement entgegen seinem Schwungmoment in eine die Arretierung der Schlageinrichtung in ihrer ersten, scharfen Position freigebende Stellung gedreht wird, wobei die freigesetzte Schlageinrichtung unmittelbar durch die Wirkung der Zugfeder in ihre zweite Position geschwenkt wird, ein zum Kragen des Schwungelementes entgegengesetzt angeordneter Federarm des Schwungelementes in dessen Freigabestellung gespannt und das Schwungelement durch die Rückfederung des Federarms stets in seine Grundstellung zurückgedreht wird.

Die Verwendung eines speziell gestalteten, exzentrisch gelagerten, mit der Schlageinrichtung lösbar in Eingriff bringbaren Schwungelementes als Freigabeelement in Wirkverbindung mit der Auslöseinrichtung in Form einer wippenartig gelagerten Platte, die einen unmittelbaren Zugang zum Köder bietet, und einhergehend mit der speziellen Anordnung der Befestigungspunkte der auf die Schlageinrichtung einwirkenden Zugfeder bedingen eine außerordentliche Schlagkraft, eine hohe Effizienz und eine bequeme Einhandbetätigung der erfindungsgemäßen Schlagfalle.

Vorteilhafte Weiterbildungen der erfindungsgemäßen Schlagfalle sind in den Patentansprüchen 2 bis 10 beschrieben.

So ist vorzugsweise benachbart zum zweiten Ende der wippenartig drehbaren Platte am zweiten Ende der Grundplatte eine sich von deren oberen Fläche aufwärts erstreckende Halterungseinrichtung vorgesehen ist, in der die dritte Achse, auf der das Schwungelement exzentrisch drehbar gelagert ist, gehaltert ist und die einen Anschlag aufweist, an dem der Federarm des Schwungelementes in dessen Freigabestellung anschlägt und rückfedernd derart gespannt wird, daß eine Rückdrehung des Schwungelementes in seine Grundstellung gegeben ist. Weiterhin sind die erste, die zweite und die dritte Achse horizontal zur Grundplatte und parallel zueinander oberhalb der Grundplatte angeordnet, und die erste Achse ist zwischen der zweiten und der dritten Achse vorgesehen ist, wobei die erste und die zweite Achse in einer Ebene liegen und die dritte Achse sich unterhalb letzterer befindet.

Zur Erzielung einer hohen Effiziens der Schlagfalle auch beim Klettern einer Maus von der Seite aus zur Auslöseeinrichtung sind vorzugsweise ausgehend vom ersten Ende der wippenartigen Platte auf der Grundplatte jeweils längsseitig der Platte sich etwa über ein Drittel deren Länge erstreckende wandartige Elemente ausgebildet, die sich von der oberen Fläche der Grundplatte bis zur Ebene in die Höhe erstrecken, in der die obere Fläche der wippenartigen Platte in ihrer Grundstellung liegt, und die innenseitig der Schlageinrichtung in deren zweiter Position gelegen sind, so daß beim Klettern einer Maus von einer Längsseite der Grundplatte aus zur wippenartigen Platte und damit beim Einwirken der Maus auf die Auslöseeinrichtung die wandartigen Elemente zusammen mit der unmittelbar in ihre zweite Position schwingenden Schlageinrichtung eine guillotineartige Einheit zum tiergerechten Töten der Maus bilden.

Für die Schlagkrafterhöhung bilden bevorzugt der erste und der zweite Arm der Schlageinrichtung einen rechten Winkel, wobei der zweite Arm in der erste, scharfen Position der Schlageinrichtung unter einem Winkel α von etwa 15° zur Lotrechten auf die Grundplatte in Richtung der zweiten Position der Schlageinrichtung geneigt ist. Zudem weist die die Auslöseeinrichtung bildende wippenartige Platte vorzugsweise eine in Richtung ihrer Längsachse verlaufende Ausnehmung auf, in der ein sich von der oberen Fläche der Grundplatte aufwärts erstreckendes Halterungselement aufgenommen ist, an der sich der zweite Befestigungspunkt der Zugfeder befindet.

Die erfindsgemäße Schlagfalle bedingt eine beachtliche Reduzierung von Lagerkapazitäten und Versandkosten dadurch, daß in der zweiten Position der Schlageinrichtung die Falle mit einer Vielzahl identischer Fallen zu einer kompakten Einheit derart stapelbar ist, daß die Grundplatten der gestapelten Fallen parallel zu einander liegen, der erste Arm der Schlageinrichtung jeweils in eine Ausnehmung in der Grundplatte der unmittelbar oberhalb in der kompakten Einheit angeordneten Falle eingreift und der Abstand der Grundplatten der gestapelten Fallen zueinander jeweils kleiner als die Höhenabmessung des Schlagteils der Schlageinrichtung bezogen die obere oberen Fläche der Grundplatte in der zweiten Position der Schlageinrichtung ist.

Für eine umweltgerechte Entsorgung gefangener Tiere bzw. von Tierkadavern und zugleich zur Vermeidung einer Gefährdung von Kindern und Haustieren bzw. Nichtzieltieren ist die Schlagfalle mit einem äußeren Gehäuse ausrüstbar bzw. in dieses in eine geschützte Position einsetzbar ist, wobei das Gehäuse mindestens mit einer ersten Öffnung versehen ist, die eine solche Größe aufweist und in der Weise angeordnet ist, daß sie Tieren mit einer gewünschten, maximalen Größe einen Zugang zur Auslöseeinrichtung der Falle ermöglicht. Gemäß der Erfindung ist dieses Gehäuse der Falle bevorzugt gebildet von einer Köderbox mit am Gehäuseboden vorgesehenen Verriegelungselementen, die in Arretiernuten an jeder Längskante der Grundplatte und an der zum Freigabeelement benachbarten zweite Stirnkante der Grundplatte der Falle in deren in das Gehäuse eingesetzten Stellung lösbar verriegelnd eingreifen. Die Köderbox weist - gesehen im Querschnitt des Gehäuses - derart konisch zum Gehäuseboden verlaufenden Seitenwänden auf, daß ein Durchgang zwischen den Seitenwänden des Gehäuses und den Längsseiten der in letzteres eingesetzten Falle für ein Nagetier wie eine Maus nicht gegeben ist und diese direkt zur Auslöseeinrichtung gelenkt wird.. Mit einem an einer Seitenwand des Gehäuses scharniermäßig angelenkten Gehäusedeckel ist die in das Gehäuse eingesetzte Falle bei Stellung der Schlageinrichtung sowohl in ihrer ersten, scharfen Position, als auch in ihrer zweiten Position (Fangposition) gesichert abdeckbar ist. Der Gehäusedeckel ist durch an ihm sowie an der anderen Seitenwand des Gehäuses vorgesehene, miteinander in Eingriff bringbare Schnappelemente lösbar verschließbar. Zur Erzielung eines sicheren sog. "head-on" Ergebnisses ist der Gehäuseboden ist in dem Zugangsbereich, der sich vor der ersten Stirnkante der Grundplatte der in das Gehäuse eingesetzten Falle befindet, mit einer Aussparung derart versehen ist, daß in Einsatzstellung der Falle eine durch die Öffnung in das Gehäuse gelangte Maus im Zugangsbereich auf dem natürlichen Boden des Einsatzortes der Falle in Richtung des den Köder enthaltenen Behältnisses der Grundplatte und somit gezielt auf die Auslöseeinrichtung der Falle weiterlaufen kann.

Die die Zugangsöffnung aufweisende Stirnseite des Gehäuses der Falle kann als auswechselbares Element gestaltet sein, so daß entsprechend dem gewünschten Einsatz Stirnwände mit unterschiedlich großen Zugangsöffnungen zur Anwendung kommen können. Ferner ist der Zugangsbereich des Gehäuses der Falle bevorzugt von einer solchen Länge, z.B. mehr als 10 cm, daß beim Fingereinstecken in das Zugangsloch des Gehäuses diese die Auslöseeinrichtung der eingesetzten Falle nicht erreichen und somit von der Schlageinrichtung nicht getroffen werden können.

Das Gehäuse der Falle kann durch ein mittige Trennwand in zwei identisch ausgebildete Gehäusehälften unterteilt sein, so daß in spiegelbildlicher Anordnung in jeder Gehäusehälfte eine Schlagfalle identischer Ausführung angeordnet sein kann.

Um ein Vorbeilaufen der Nager zwischen dem Gehäuse der Falle und einer anliegenden Gebäudewand zu verhindern, d.h. das für Nager typischen Randkontaktverhalten zu berücksichtigen, kann - gesehen im Querschnitt des Gehäuses der Falle - die Außenfläche einer der zum Gehäuseboden konisch verlaufenden Seitenwände des Gehäuses an ihren beiden längsseitigen Enden vom Gehäuseboden aufwärts bis zu einer solchen Höhe lotrecht und zu ihrer oberen Längskante fluchtend verlaufen, so daß zum einem das Gehäuse der Falle an einer Gebäudewand unter Vermeidung eines Durchgangs für ein Nagetier zwischen der entsprechenden Seitenwand des Gehäuses und der Gebäudewand fixierbar ist, und zum anderen das Gehäuse zu Stapelzwecken in ein identisch ausgebildetes Gehäuse einsetzbar ist.
Das Gehäuse der Schlagfalle und die Schlagfalle selbst sind, - abgesehen von der Zugfederbevorzugt aus Polypropylen (PP) hergestellt.

Ausgestaltungen der erfindungsgemäßen Schlagfalle werden nun anhand der Zeichnungen beschrieben. In diesen sind:

### Kurzbeschreibung der Figuren

**Fig. 1** eine perspektivische Seitenansicht einer bevorzugte Ausführungsform der Schlagfalle bei Stellung der Schlageinrichtung in der ersten, scharfen Position,
**Fig. 2** eine der Figur 1 entsprechende perspektivische Seitenansicht der Ausführungsform bei Stellung der Schlageinrichtung nach Schwingen in ihre zweite Position,
**Fig. 3** eine perspektivische Seitenansicht der Grundplatte der Ausführungsform nach Fig. 1,
**Fig. 4** eine perspektivische Seitenansicht der Grundplatte der Ausführungsform entsprechend der Fig. 3, wobei jedoch in Abänderung am ersten Ende der Grundplatte eine Ausnehmung zum Anhängen oder Greifen der Schlagfalle ausgebildet ist,
**Fig. 5** eine perspektivische Ansicht der Unterseite die Auslöseeinrichtung bildenden wippenartigen Platte der Ausführungsform nach Fig. 1, nach einer Drehung der Platte um 180° um ihre Querachse,
**Fig. 6** eine Draufsicht auf die Ausführungsform in der in Fig. 2 gezeigten Stellung der Schlageinrichtung,
**Fig. 7** eine Unteransicht der Ausführungsform nach Fig. 1,
**Fig. 8** eine perspektivische Darstellung der Schlageinrichtung der Ausführungsform nach Fig. 1 ohne Schlagteil,
**Fig. 9** eine perspektivische Ansicht des Schlagteils der Schlageinrichtung der Ausführungsform nach Fig. 1 mit Blickrichtung auf die Stirnseite des Schlagteils,
**Fig. 10** eine perspektivische Darstellung der Zugfeder der Ausführungsform nach Fig. 1 in Form einer Schraubenfeder,
**Fig. 11** eine perspektivische Seitenansicht des Freigabeelementes der Ausführungsform nach Fig. 1 in Form eines Schwungelementes mit Federarm,
**Fig. 12** eine Seitenansicht von zwei übereinander gestapelten Schlagfallen der Ausführung gemäß Fig. 1, wobei sich die Schlageinrichtung jeder Schlagfalle in der in Fig. 2 dargestellten zweiten Position jeweils befindet.
**Fig. 13** eine perspektivische Ansicht des äußeren Gehäuses der Schlagfalle mit Blickrichtung auf eine Stirnseite des Gehäuses, wobei die Stirnwand des Gehäuses entfernt ist und die Schlageinrichtung der Schlagfalle sich in ihrer erste, scharfen Position befindet,
**Fig. 14** eine Draufsicht auf das Gehäuse der Schlagfalle bei aufgeklapptem Gehäusedeckel ohne Schlagfalle,
**Fig. 15** eine Seitenansicht des Gehäuses bei verschlossenem Gehäusedeckel,
**Fig. 16** eine Seitenansicht des Gehäuses mit spiegelbildlicher Anordnung der eingesetzten Schlagfalle in jeder Gehäusehälfte bei Stellung der Schlageinrichtung in ihrer ersten, scharfen Position und geschlossenem Gehäusedeckel, wobei die in Seitenwand des Gehäuses in Blickrichtung nicht dargestellt ist,
**Fig. 17** eine Draufsicht auf das Gehäuse mit spiegelbildlicher Anordnung der Schlagfalle entsprechende der Fig. 16, jedoch bei geöffnetem Gehäusedeckel, und
**Fig. 18** eine Vorderansicht der die Zugangsöffnung aufweisenden Stirnwand des Gehäuses mit einer senkrecht verlaufenden Seitenwand bei geöffnetem Gehäusedeckel.

### Beschreibung bevorzugter Ausführungsformen

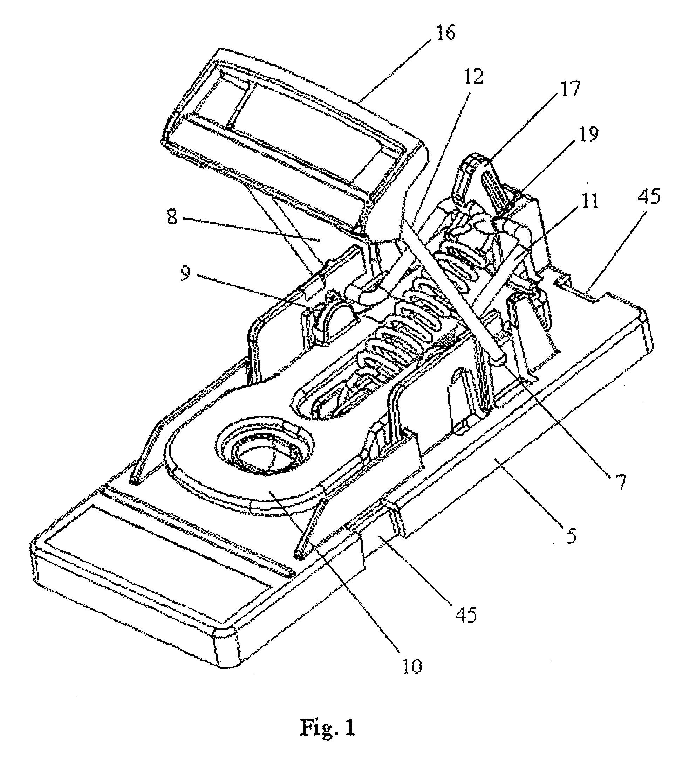

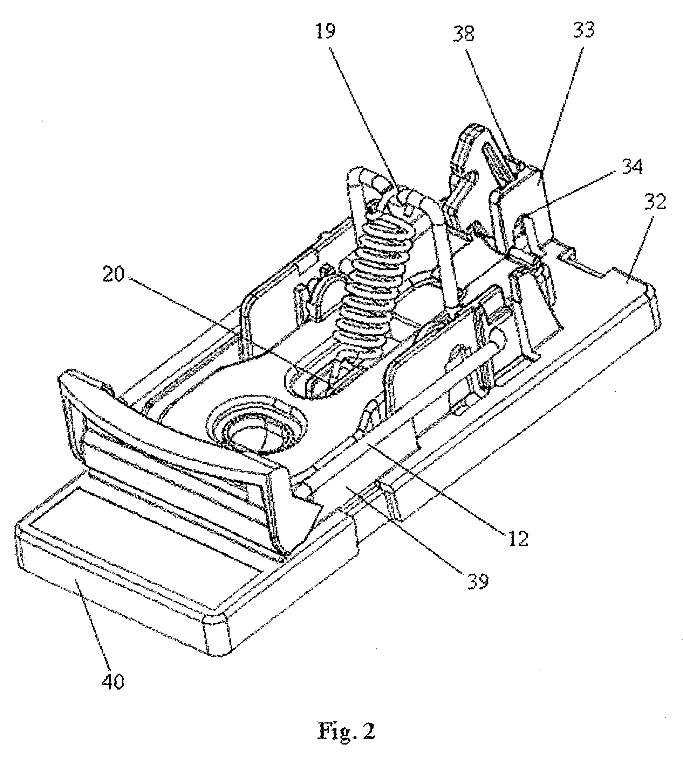

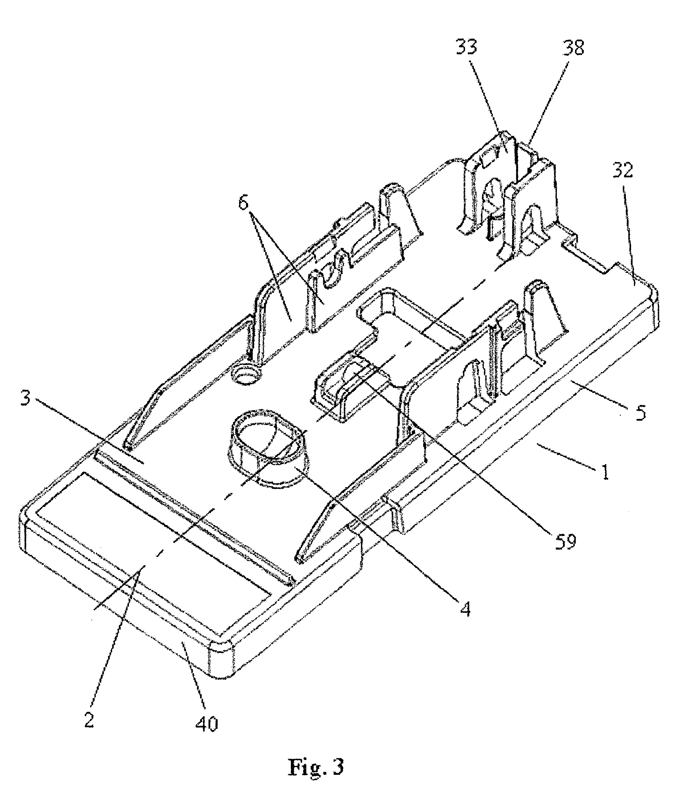

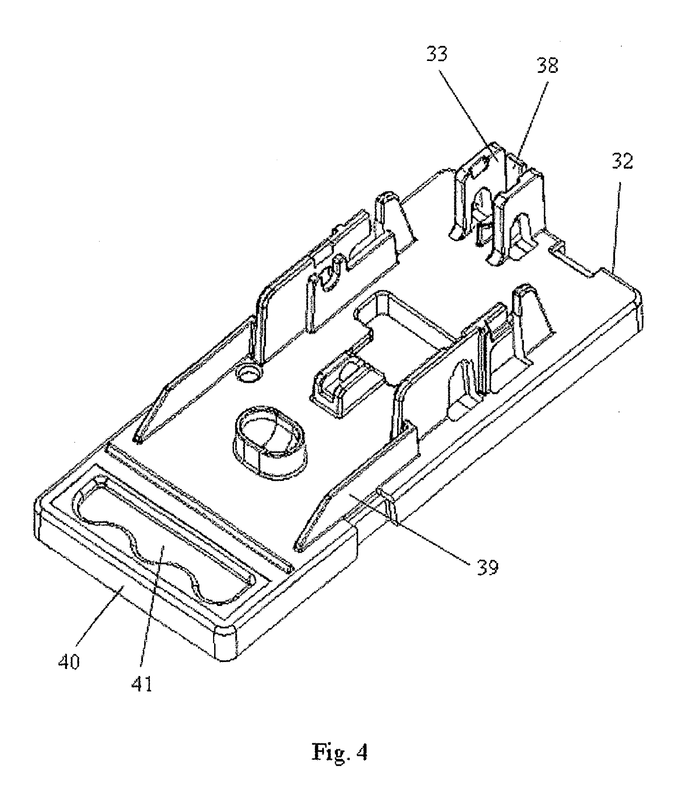

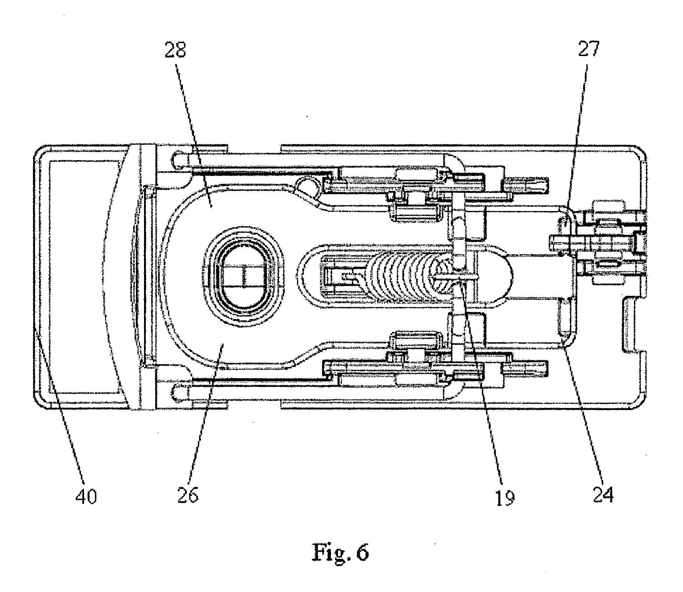

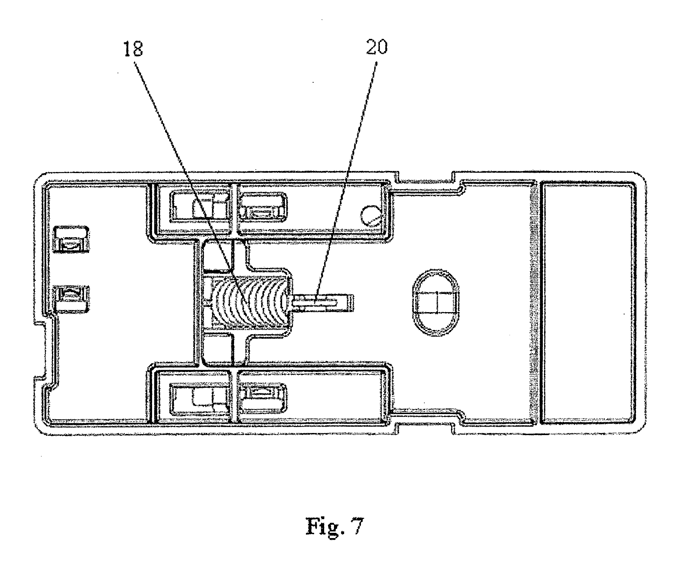

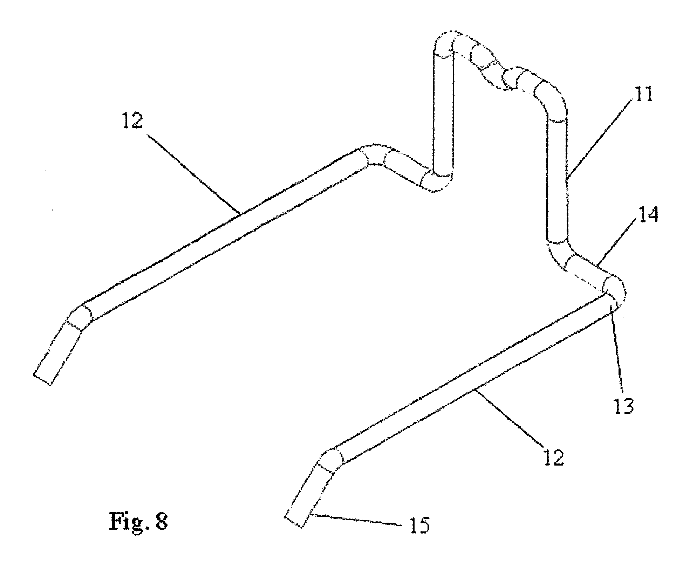

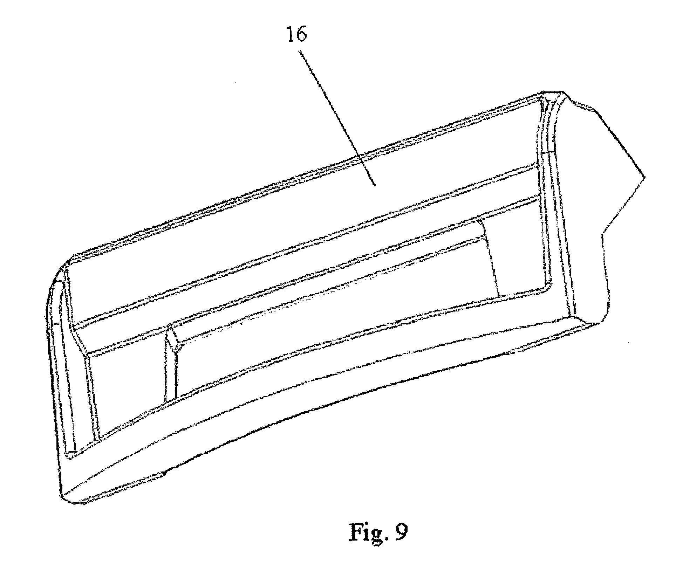

Wie aus den Fig. 1, 2 ,6 und 7 hervorgeht, die die Ausführungsform der Schlagfalle aus verschiedenen Blickrichtungen zeigen, weist die Schlagfalle eine Grundplatte 1 auf, die für sich allein in den Figuren 3 und 4 gezeigt ist. Die Grundplatte 1 weist im Bereich ihres vorderen Abschnitts auf ihrer Längsachse 2 ein sich von der oberen Fläche 3 der Grundplatte 1 aufwärts erstreckendes Behältnis 4 für den Köder der Schlagfalle auf. Parallel zu den Längskanten 5 der Grundplatte 1 erstrecken sich etwa von deren Längsmitte aus in den hinteren Abschnitt der Grundplatte 1 beidseitig wandartige Halterungselemente 6, in denen quer zur Längsachse 2 der Grundplatte 1 sowohl die erste Achse 7, um die die Schlageinrichtung 8 der Schlagfalle schwenkbar ist, geführt, als auch die zweite Achse 9 gelagert ist, um die die Auslöseeinrichtung 10 der Schlagfalle verschwenkbar ist. Die Schlageinrichtung 8 ist, wie am besten Fig. 8 zeigt, bügelartig mit einem ersten Arm 11 und zwei identischen Armen 12 ausgebildet, deren unteres Ende 13 rechtwinklig mit Abschnitte 14 des ersten Arms 11 verbunden sind. Mit den Abschnitten 14 ist der erste Arm 11 in Einbaustellung der Schlageinrichtung 8 in der Schlagfalle (Fig. 1 und 2) in den Halterungselementen 6 der Grundplatte 1 gelagert , wobei die Abschnitte 14 zur Längsachse 2 der Grundplatte 1 quer verlaufen und die erste Achse 7 bilden, um die die Schlageinrichtung 8 verschwenkbar ist. Die oberen Enden 15 der zweiten Arme 12 der Schlageinrichtung 8 sind mit dessen Schlagteil 16 verbunden, das für sich allein in Fig. 9 dargestellt ist.

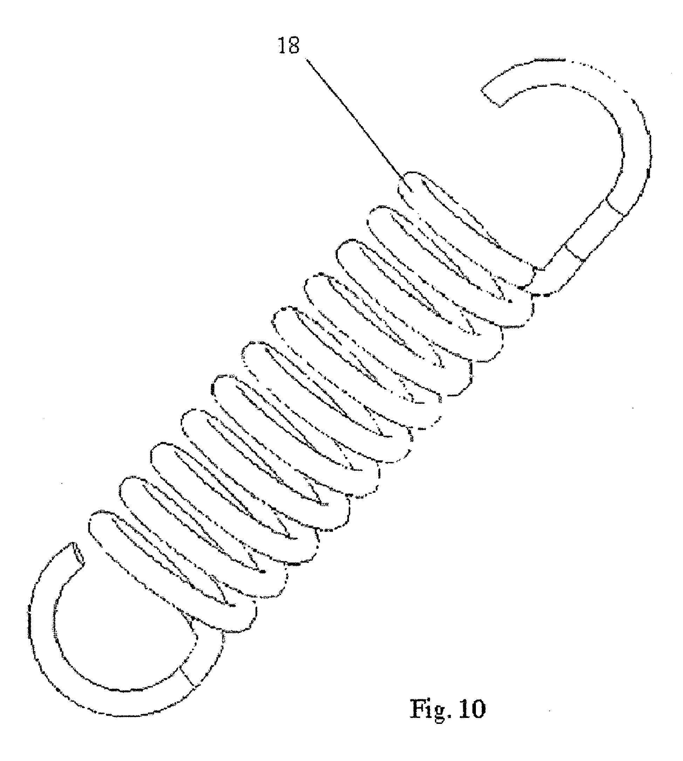

In Fig. 1 befindet sich die Schlageinrichtung 8 in ihrer ersten, scharfen Position, in der sie durch das Zusammenwirken des den ersten Arm 11 haltenden Freigabeelementes 17 und der Auslöseeinrichtung 10 in deren Ruhestellung lösbar gehalten ist, solange die Zugfeder 18, die, wie Fig. 10 zeigt, in Form einer Schraubenfeder ausgebildet ist und deren erster und zweiter Befestigungspunkt 19 und 20 am ersten Arm 11 der Schlageinrichtung 8 bzw. an der Grundplatte 1 liegen, ein Verschwenken der Schlageinrichtung 8 in deren zweite, aus Figur 2 ersichtliche Position nicht bewirken kann.

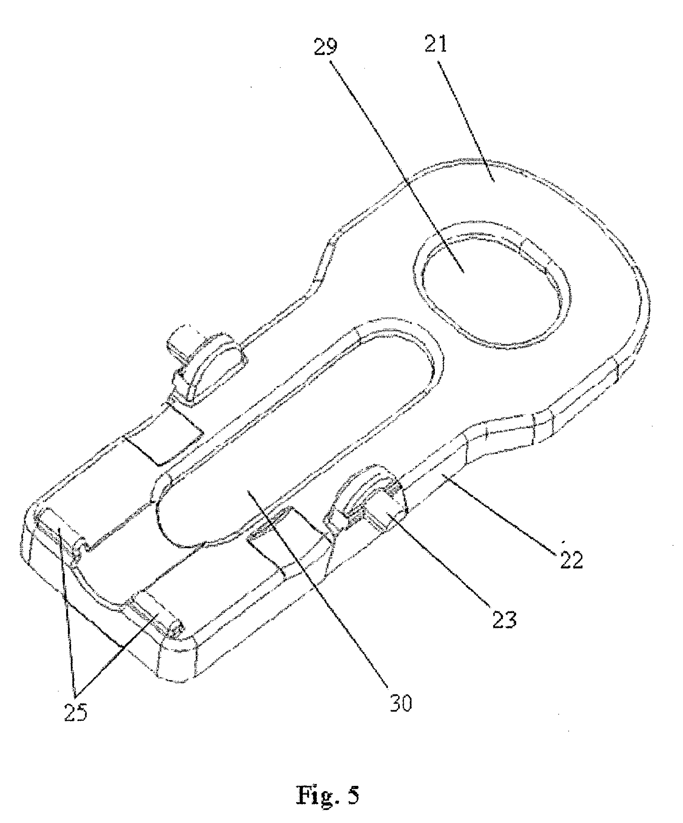

Die Auslöseeinrichtung 10 ist in Form einer wippenartigen Platte ausgebildet, deren Unterseite 21 in Figur 5 zu sehen ist und die einen Grundriß aufweist, der dem Grundriß eines gängigen Kronkorken-Flaschenöffners ähnlich ist. Die Platte 10 weist an ihren beiden Längskanten 22 vorstehenden Lagerbolzen 23 auf, mit denen sie in den Halterungselementen 6 der Grundplatte 1 gelagert ist und die die zweite Achse 9 bilden, die aus der Mitte der Platte 10 in Richtung zu deren zweiten Ende 24 hin ein wenig versetzt ist und um die die Platte 10 wippenartig verschwenkbar ist. Am zweiten Ende 24 der Platte 10 sind von deren Unterseite 21 vorstehende Stützelemente 25 und auf der gegenüberliegenden oberen Fläche 26 der Platte 10 ein sich von dieser aufwärts erstreckendes Widerlager 27 vorgesehen. Weiterhin weist die Platte 10 in Nähe ihres ersten Endes 28 eine ovale erste Ausnehmung 29 sowie beabstandet dazu eine sich längsmittig erstreckende zweite Ausnehmung 30 auf.

Wie die Fig. 1 und 2 verdeutlichen, ist die Platte 10 in der Schlagfalle oberhalb der Grundplatte 1 um die zweite Achse 9 wippenartig drehbar und in ihrer Ruhestellung parallel zur Grundplatte 1 angeordnet, wobei die Stützelemente 25 auf der Unterseite 21 der Platte 10 auf der oberen Fläche 3 der Grundplatte 1 aufliegen. Die ovale erste Ausnehmung 29 der Platte 10 umfaßt das Behältnis 4 für den Köder derart, daß die Öffnung 31 des Behältnisses 4 stets zugänglich ist.

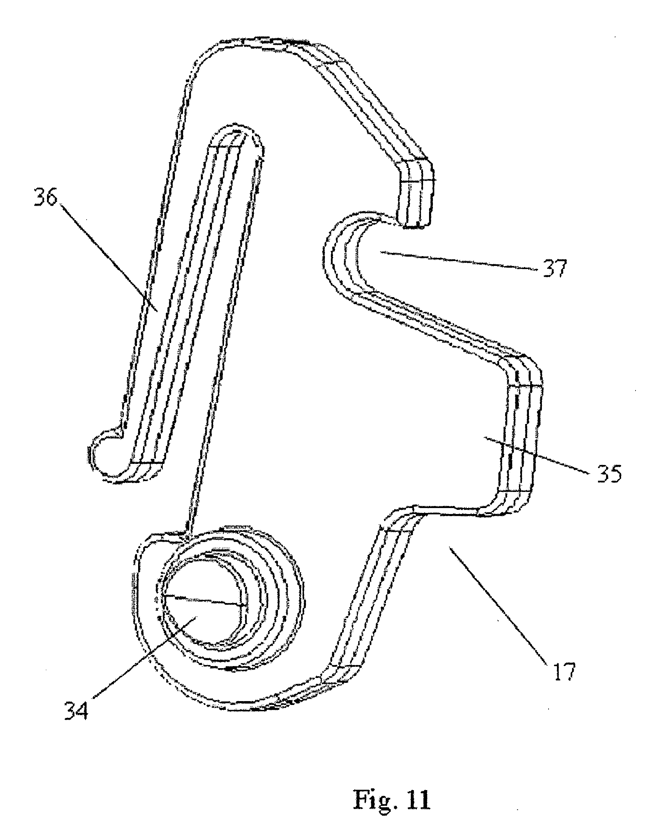

Wie aus den Figuren 1 bis 4 hervorgeht, ist am zweiten Ende 32 der Grundplatte 1 eine sich von deren oberer Fläche 3 aufwärts erstreckende Halterungseinrichtung 33 benachbart zum zweiten Ende 24 der wippenartigen Platte 10 vorgesehen, in der ein das Freigabeelement 17 der Schlagfalle bildendes elastisches Schwungelement exzentrisch um eine dritte Achse 34 verschwenkbar gelagert ist. Das Schwungelement 17, das für sich allein in Fig. 11 dargestellt ist, weist einen Kragen 35, der in der Grundstellung des Schwungelementes 17 von deren Schwungmoment beaufschlagt am Widerlager 27 der Grundplatte 1 aufliegt, und entgegengesetzt zum Kragen 35 einen Federarm 36 auf.

In der Ruhestellung der wippenartigen Platte 10 ist der erste Arm 11 der Schlageinrichtung 8, an dem sich der erste Befestigungspunkt 19 der Zugfeder 18 befindet, in einer oberhalb des Kragens 35 ausgebildeten Auskehlung 37 des Schwungelementes 17 gehalten und die Schlageinrichtung 8 somit in ihrer ersten, scharfen Position festgelegt, wie Fig. 1 zeigt. Die zweiten Arme 12 der Schlageinrichtung 8 verlaufen bei der dargestellten Ausführungsform der Schlagfalle in der ersten, scharfen Position der Schlageinrichtung 8 unter einem Winkel α von etwa 15⁰ zur Lotrechten auf die Grundplatte 1, wobei sie zur zweiten Position der Schlageinrichtung 8 hin geneigt sind, wie Fig. 1 zeigt. Die erste, die zweite und die dritte Achse 7 bzw. 9 bzw. 34 der Schlagfalle sind horizontal zur Grundplatte 1 und parallel zueinander angeordnet, wobei die erste Achse 7 zwischen der zweiten Achse 9 und der dritten Achse 34 vorgesehen ist, die erste Achse 7 und die zweite Achse 9 in einer Ebene liegen und die dritte Achse 34 sich unterhalb letzterer befindet.

Klettert nun z.B. eine Maus von der Grundplatte 1 aus auf die in ihrer Ruhestellung befindliche wippenartige Platte 10, um an den Köder im Behältnis 4 zu gelangen, so wird durch die augenblicklich einsetzende Wippbewegung der Platte 10 der Kragen 35 des Schwungelementes 17 von dem Widerlager 27 der Platte 10 entgegen dem Schwungmoment des Schwungelementes 17 in dessen Freigabestellung beaufschlagt, so daß die Schlageinrichtung 8 augenblicklich durch die Wirkung der Zugfeder 18 mit hoher Schlagkraft in ihre in Fig. 2 dargestellte zweite Position schwingt und die Maus unmittelbar erschlägt, d.h. tiergerecht tötet. Bei der Drehbewegung des freigesetzten Schwungelementes 17 in die Freigabestellung kommt dessen Federarm 36 mit einem rückwärtigen Anschlag 38 der Halterungseinrichtung 33 des Schwungelementes 17 derart rückfedernd in Eingriff, daß das in der Halterungseinrichtung 33 exzentrisch um der dritten Achse 34 verschwenkbar gelagerte Schwungelement 17 durch die Rückfederwirkung in die Nullstellung zurückgedreht und dann durch sein Schwungmoment in seine Grundstellung zurückbewegt wird, in der der Kragen 35 des Schwungelementes 17 mit dem Widerlager 27 der Platte 10 in Eingriff steht.

Wie weiterhin aus den Figuren 1 bis 4 ersichtlich ist, können ausgehend vom ersten Ende 28 der wippenartigen Platte 10 auf der Grundplatte 1 jeweils längsseitig der Platte 10 wandartige Elemente 39 vorgesehen sein, die etwa über ein Drittel der Länge der Platte 10 verlaufen. Die wandartigen Elemente 39 erstrecken sich von der oberen Fläche 3 der Grundplatte 1 bis zu der Ebene in die Höhe, in der die obere Fläche 26 der wippenartigen Platte 10 in ihrer Ruhestellung liegt. Die wandartigen Elemente 39 sind innenseitig der Schlageinrichtung 8 in deren zweiter Position gelegen, wie Fig. 2 verdeutlicht. Beim Klettern einer Maus von einer Längsseite der Grundplatte 1 aus zur wippenartigen Platte 10 und damit beim Einwirken des Maus auf letztere bilden die wandartigen Elemente 39 zusammen mit der unmittelbar in ihre zweite Position schwingenden Schlageinrichtung 8 eine guillotineartige Einheit, von der die Maus augenblicklich tiergerecht getötet wird.

Wie Fig. 8 zeigt, kann die Grundplatte 1 im Bereich ihrer ersten Stirnkante 40 eine Ausnehmung 41 aufweisen, die zur Handhabung der Schlagfalle dient.

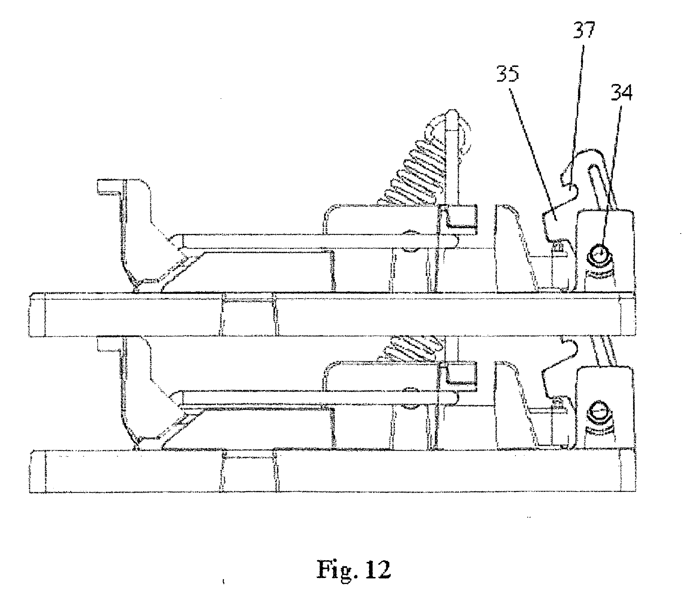

Figur 12 zeigt, daß die Schlagfalle in der ersten Position der Schlageinrichtung 8 gemäß Figur 2 mit einer Vielzahl ( hier zwei) identisch ausgebildeten Schlagfalle geeignet zur einer kompakten Einheit stapelbar ist. In dieser kompakten Einheit liegen die Grundplatten 1 der gestapelten Schlagfallen parallel zu einander, und der erste Arm 11 der Schlageinrichtung 8 ragt dabei jeweils in eine weitere Ausnehmung der Grundplatte 1 der unmittelbar in der kompakten Einheit oberhalb angeordneten Schlagfalle. Der Abstand der Grundplatten 1 der gestapleten Schlagfallen zu einander ist jeweils kleiner als die Höhenabmessung des Schlagteils 16 der Schlageinrichtung 8 bezogen auf die obere Fläche 3 der Grundplatte 1 in der zweiten Position der Schlageinrichtung 8.

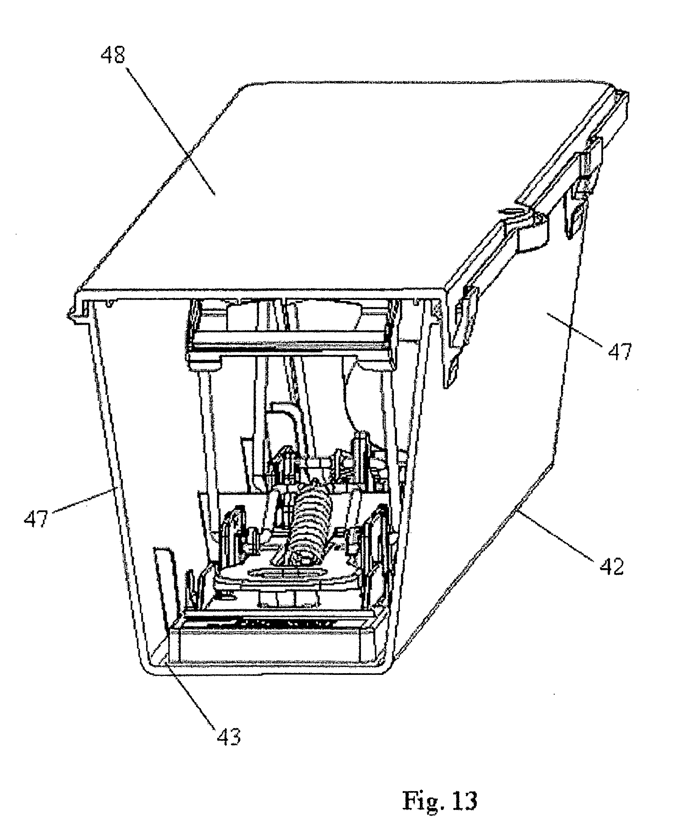

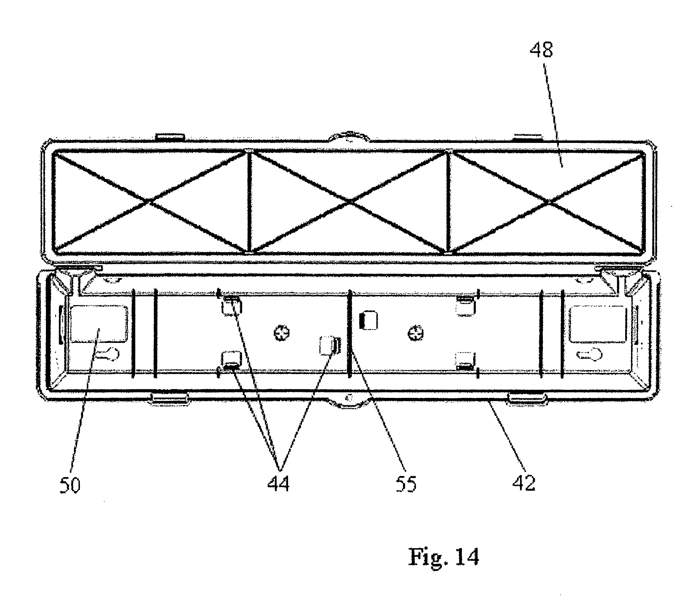

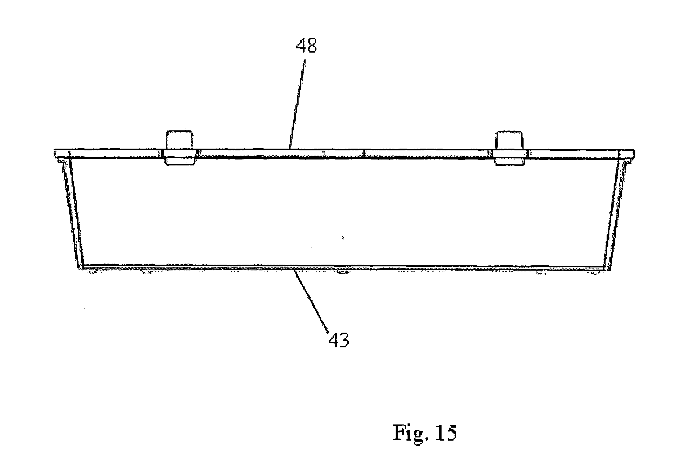

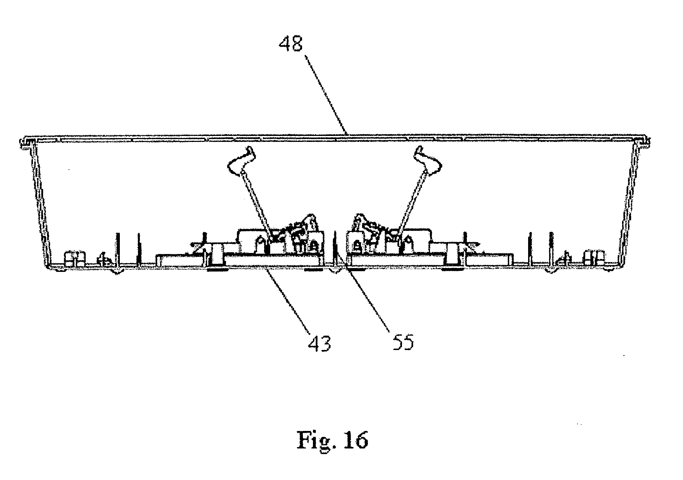

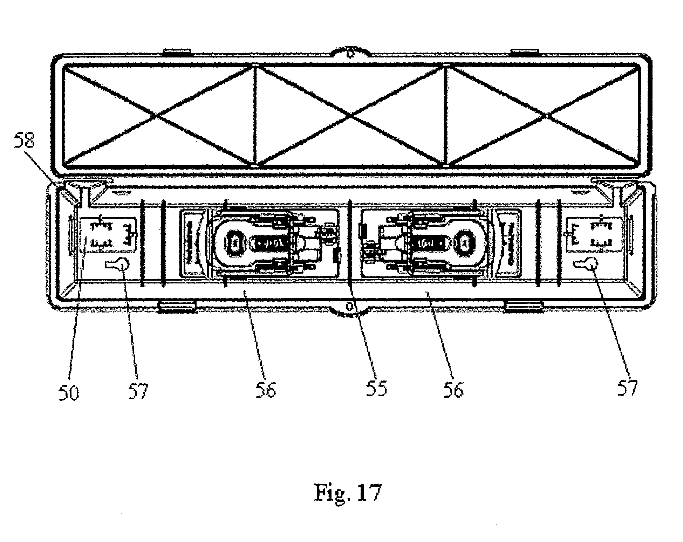

Aus den Figuren 13 bis 17 geht ein äußeres Gehäuse 42 der Schlagfalle hervor, in das diese lösbar in eine geschützte Position einsetzbar ist und das in Form einer Köderbox ausgebildet ist.
Am Gehäuseboden 43 sind Verrieglungselemente 44 vorgesehen, die im eingesetzten Zustand der Schlagfalle in Arretiernuten 45 an jeder Längskante 5 der Grundplatte 1 und an der zweiten Stirnkante 46 der Grundplatte 1, die zur Halterungseinrichtung 33 des Schwungelementes 17 benachbart ist, die Schlagfalle am Gehäuseboden 43 lösbar verriegelnd eingreifen. Wie am besten aus Fig. 13 ersichtlich ist, verlaufen die Seitenwände 47 des Gehäuses 42 - gesehen im Querschnitt des Gehäuses 42 - derart konisch zum Gehäuseboden 43, daß ein Durchgang zwischen den Seitenwänden 47 und den Längsseiten der in das Gehäuse 42 eingesetzten Schlagfalle für ein Nagetier, z.B. eine Maus nicht gegeben ist. Das Gehäuse 42 weist einen an einer Seitenwand 47 scharniermäßig angelenkten Gehäusedeckel 48 auf (Fig. 14), durch den die in das Gehäuse 42 eingesetzte Schlagfalle bei Stellung der Schlageinrichtung 8 sowohl in ihrer ersten, scharfen Position (Fig 16), als auch in ihrer zweiten Position, der Fangposition gesichert abdeckbar ist. Der Gehäusedeckel 48 ist durch an der anderen Seitenwand 47 des Gehäuses 42 sowie am Gehäusedeckel 48 vorgesehene Schnappelemente 49, die miteinander in Eingriff bringbar sind, lösbar verschließbar (Fig. 15). Wie am besten aus Fig. 17 ersichtlich ist, weist der Gehäuseboden 43 in dem Zugangsbereich der Köderbox, der sich vor der ersten Stirnkante 40 der Grundplatte 1 der in das Gehäuse 42 eingesetzten Schlagfalle befindet, eine Aussparung 50 auf. In Einsatzstellung der Schlagfalle wird nun z.B. eine Maus, die durch die Öffnung 51 (Fig. 17) in das Gehäuse 42 gelangt, infolge der Aussparung 50 auch im Gehäuse 42 auf dem natürlichen Boden des Einsatzortes der Schlagfalle in deren Zugangsbereich in der Richtung der Grundplatte 1 weiterlaufen, in der das den Köder enthaltenden Behältnisses 4 vorgesehen ist. Die Maus wird somit gezielt auf die wippenartige Platte 10 der Schlagfalle gelenkt, bei deren Berührung sie von der Schlageinrichtung 8 augenblicklich tiergerecht getötet wird. Da das Gehäuse 42 durch den Gehäusedeckel 48 verschlossen ist, ist gesichert, daß Kinder, Haustiere und Nichtzieltiere nicht an den in der Schlagfalle befindlichen Tierkadaver gelangen können. Da weiterhin der Abstand der Öffnung 51 des Gehäuses 42 von der Schlageinrichtung 8 in deren erster, scharfer Position und in deren zweiter Position (Fangposition) stets größer als 10 cm ist, ist gesichert , daß die Schlagfalle mit Finger von außen nicht ausgelöst werden kann bzw. letztere nicht getroffen werden können. Auch kann die in der Schlagfalle befindliche Maus mit den Fingern von außen nicht berührt werden.

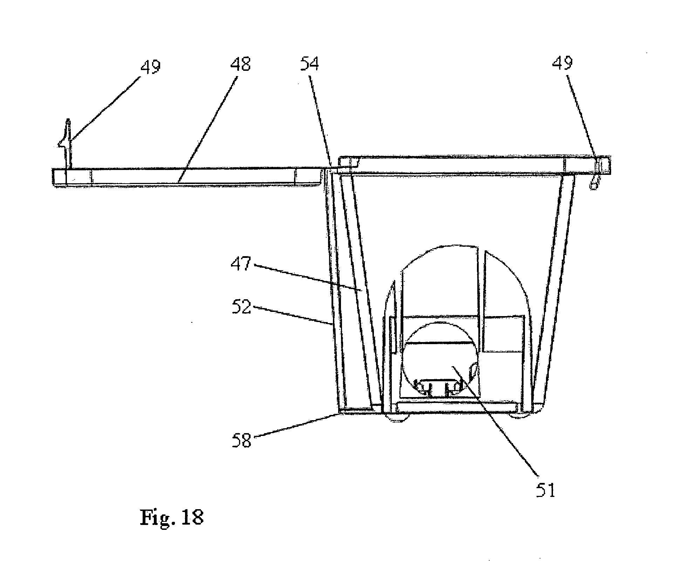

Wegen des bekannten Randkontaktverhaltens z.B. von Mäusen und Ratten ist es insbesondere bei der Bodenhaltung von Geflügel für die Effizienz der Schlagfalle angebracht, deren äußeres Gehäuse 42 unmittelbar an einer Gebäudewand am Boden derart zu platzieren, daß das zu fangende Nagetier nicht zwischen der Seitenwand 47 des Gehäuses 42 und der Gebäudewand hindurchlaufen kann. Um dies zu gewährleisten, kann - gesehen im Querschnitt des Gehäuses 42 der Schlagfalle - die Außenfläche 52 einer der zum Gehäuseboden 43 konisch verlaufenden Seitenwände 48 des Gehäuses 42 an ihren beiden längsseitigen Enden 54 vom Gehäuseboden 43 aufwärts bis zu einer Höhe lotrecht zu letzterem und zu ihrer oberen Längskante 54 fluchtend verlaufen (Fig. 18), so daß das Gehäuse 42 mit der entsprechenden Seitenwand 47 plan an der Gebäudewand fixierbar ist.

Wie Fig. 17 zeigt, kann das Gehäuse 42 der Schlagfalle auch mittig durch eine Trennwand 55 in zwei identisch ausgebildete Gehäusehälften 56 unterteilt sein, in denen jeweils in spiegelbildlicher Anordnung eine Schlagfalle der beschriebenen Ausführung fixiert sein kann. Schlüsselformartige Befestigungslöcher 57, die im Gehäuseboden 43 jeweils an dessen längsseitigem Ende 58 vorgesehen sind, ermöglichen eine sichere Fixierung des Gehäuses 42 der Schlagfalle auf dem Boden ihres Einsatzortes.

### Liste der Bezugszeichen:

- 1: Grundplatte
- 2: Längsachse der Grundplatte
- 3: obere Fläche der Grundplatte
- 4: Behältnis für den Köder
- 5: Längskanten der Grundplatte
- 6: wandartige Halterungselemente
- 7: erste Achse
- 8: Schlageinrichtung
- 9: zweite Achse
- 10: Auslöseeinrichtung, wippenartige Platte
- 11: erster Arm der Schlageinrichtung
- 12: zweite Arme der Schlageinrichtung
- 13: unteres Ende der zweiten Arme
- 14: Abschnitte des ersten Arms
- 15: oberes Ende der zweiten Arme
- 16: Schlagteil
- 17: Freigabeelement, Schwungelement
- 18: Zugfeder
- 19: erster Befestigungspunkt der Zugfeder
- 20: zweiter Befestigungspunkt der Zugfeder
- 21: Unterseite der wippenartigen Platte
- 22: Längskanten der Platte
- 23: Lagerbolzen
- 24: zweites Ende der Platte
- 25: Stützelemente
- 26: obere Fläche der Platte
- 27: Widerlager
- 28: erstes Ende der wippenartigen Platte
- 29: erste Ausnehmung der wippenartigen Platte
- 30: zweite Ausnehmung der wippenartigen Platte
- 31: Öffnung des Behältnisses
- 32: zweites Ende der Grundplatte
- 33: Halterungseinrichtung
- 34: dritte Achse
- 35: Kragen
- 36: Federarm des Schwungelementes
- 37: Auskehlung
- 38: Anschlag der Halterungseinrichtung
- 39: wandartige Elemente
- 40: erste Stirnkante der Grundplatte
- 41: Ausnehmung der Grundplatte
- 42: äußeres Gehäuse der Schlagfalle
- 43: Gehäuseboden
- 44: Verriegelungselemente
- 45: Arretiernuten
- 46: zweite Stirnkante der Grundplatte
- 47: Seitenwände des Gehäuses
- 48: Gehäusedeckel
- 49: Schnappelemente
- 50: Aussparung des Gehäusebodens
- 51: Öffnung des Gehäuses
- 52: Außenfläche einer Seitenwand
- 53: längsseitige Enden der Seitenwand
- 54: obere Längskante der Seitenwand
- 55: Trennwand des Gehäuses
- 56: Gehäusehälften
- 57: Befestigungslöcher
- 58: längsseitige Enden des Gehäusebodens
- 59: Halterungselement der Grundplatte
- α: Neigungswinkel des zweiten Arms der Schlageinrichtung

## Patentansprüche

1. Schlagfalle für Nagetieren, insbesondere für Mäusen und Ratten, mit einer Grundplatte (1), die mit einem Behältnis (4) zur Aufnahme eines Köders versehen ist, mit einer Schlageinrichtung (8), die an der Grundplatte (1) um eine erste Achse (7) schwenkbar gelagert, gegen die Wirkung einer Zugfeder (18) beanspruchbar und aus einer ersten, scharfen Position lösbar ist, wenn ein Tier auf eine Auslöseeinrichtung (10) einwirkt, die dadurch aus einer Ruhestellung um eine zweite, an der Grundplatte (1) gelagerte Achse (9) in eine Auslösestellung schwenkbar ist, in der ein Freigabeelement (17), das mit der Schlageinrichtung (8) in deren ersten, scharfen Position in Eingriff steht, von der Auslöseeinrichtung (10) derart verschwenkbar ist, daß die um die erste Achse (7) schwenkbare Schlageinrichtung (8) aus ihrer ersten, scharfen Position lösbar ist und durch die Einwirkung der Zugfeder (18) unmittelbar in eine zweite Position schwingt, in der sie das Tier trifft und tötet, wobei die Schlageinrichtung (8). die sich von der ersten Achse (7) erstreckt, mit einem ersten und einen zweiten Arm (11 bzw. 12) versehen ist, ein erster Befestigungspunkt (19) der Zugfeder (18) an dem Ende der Schlageinrichtung (8) vorgesehen ist, das von der ersten Achse (7) des ersten Arms (11) drehbar ist, der zweite Befestigungspunkt (20) der Zugfeder (18) an dem Gestell (1) vorgesehen ist, die Kraftlinie zwischen den beiden Befestigungspunkten (19 und 20) der Zugfeder (18) durch die oder in der Nähe der ersten Achse (7) verläuft, wenn die Schlageinrichtung (8) sich in ihrer ersten, scharfen Position befindet, und wobei die Auslöseeinrichtung (10) mindestens in ihrer Ruhestellung die Öffnung (31) des Behältnisses (4) für den Köder umfaßt und zumindest in der Auslösestellung der Auslöseeinrichtung (10) die Öffnung (31) des Behältnisses (4) für den Köder frei zugänglich ist,
**dadurch gekennzeichnet, daß**
- die Auslöseeinrichtung von einer um die zweite Achse (9) der Grundplatte (1) oberhalb letzterer wippenartig drehbaren Platte (10) gebildet ist, die in ihrer Ruhestellung parallel zur Grundplatte (1) angeordnet ist, in Nähe ihres ersten Endes (28) eine die Öffnung (31) des Behältnisses (4) für den Köder der Grundplatte (1) stets zugänglich umfassende erste Ausnehmung (29) sowie am entgegengesetzten zweiten Ende (24) ein sich von der oberen Fläche (26) der Platte (10) aufwärts erstreckendes Widerlager (27) aufweist,
- das Freigabeelement von einem elastischen Schwungelement (17) gebildet ist, das exzentrisch auf einer dritten Achse (34) an der Grundplatte (1) in Nähe des zweiten Endes (24) der Platte (10) durch sein Schwungmoment in eine Grundstellung drehbeaufschlagt gelagert ist, in der ein Kragen (35) des Schwungelementes (17) mit dem Widerlager (27) der Platte (10) in Eingriff steht und die Schlageinrichtung (8) in ihrer ersten, scharfen Position lösbar am Schwungelement (17) arretiert ist, wobei dritten die Achse (34) zwischen dem ersten Ende (28) der wippenartigen Platte (10) und der ersten Achse (7) und der zweite Befestigungspunkt (20) der Zugfeder (18) an der Grundplatte (1) zwischen der zweiten Achse (9) und dem ersten Ende (28) der Platte (10) vorgesehen sind, so daß bei einer gegen die Grundplatte (1) gerichteten Einwirkung auf das erste Ende (28) der wippenartigen Platte (10) der Kragen (35) des Schwungelementes (17) durch das Widerlager (27) der Platte (10) beaufschlagt und das exzentrisch gelagerte Schwungelement (17) entgegen seinem Schwungmoment in eine die Arretierung der Schlageinrichtung (8) in ihrer ersten, scharfen Position freigebende Stellung gedreht wird, wobei die freigesetzte Schlageinrichtung (8) unmittelbar durch die Wirkung der Zugfeder (18) in ihre zweite Position geschwenkt wird, ein zum Kragen (35) des Schwungelementes (17) entgegengesetzt angeordneter Federarm (36) des Schwungelementes (17) in dessen Freigabestellung gespannt und das Schwungelement (17) durch die Rückfederung des Federarms (36) in Richtung seiner Grundstellung zurückgedreht wird.

2. Falle nach Anspruch 1, **dadurch gekennzeichnet, daß** benachbart zum zweiten Ende (24) der wippenartig drehbaren Platte (10) am zweiten Ende (32) der Grundplatte (1) eine sich von deren oberen Fläche (3) aufwärts erstreckende Halterungseinrichtung (33) vorgesehen ist, in der die dritte Achse (34), auf der das Schwungelement (17) exzentrisch drehbar gelagert ist, gehaltert ist und die einen Anschlag (38) aufweist, an dem der Federarm (36) des Schwungelementes (17) in dessen Freigabestellung anschlägt und rückfedernd derart gespannt wird, daß eine Rückdrehung des Schwungelementes (17) in Richtung seiner Grundstellung gegeben ist.

3. Falle nach Anspruch 1 und 2, **dadurch gekennzeichnet, daß** die erste, die zweite und die dritte Achse (7 bzw. 9 bzw. 34) horizontal zur Grundplatte (1) und parallel zueinander oberhalb der Grundplatte (1) angeordnet sind und die erste Achse (7) zwischen der zweiten und der dritten Achse (9 bzw. 34) vorgesehen ist, wobei die erste und die zweite Achse (7 bzw. 9) in einer Ebene liegen und die dritte Achse (34) sich unterhalb letzterer befindet.

4. Falle nach einem der vorhergehenden Ansprüche, **dadurch gekennzeichnet, daß** ausgehend vom ersten Ende (28) der wippenartigen Platte (10) auf der Grundplatte (1) jeweils längsseitig der Platte (10) wandartige Elemente (39) etwa über ein Drittel der Länge der Platte (10) verlaufen, die sich von der oberen Fläche (3) der Grundplatte (1) bis zu der Ebene in die Höhe erstrecken, in der die obere Fläche (26) der wippenartigen Platte (10) in ihrer Grundstellung liegt, und die innenseitig der Schlageinrichtung (8) in deren zweiter Position gelegen sind, so daß beim Klettern einer Maus von einer Längskante (5) der Grundplatte (1) aus zur wippenartigen Platte (10) und damit beim Einwirken der Maus auf die Auslöseeinrichtung (10) die wandartigen Elemente (39) zusammen mit der augenblicklich in ihre zweite Position schwingenden Schlageinrichtung (8) eine guillotineartige Einheit zum tiergerechten Töten der Maus bilden.

5. Falle nach einem der vorhergehenden Ansprüche, **dadurch gekennzeichnet, daß** der erste und die zweite Arme (11 bzw. 12) der Schlageinrichtung (8) einen rechten Winkel bilden und die zweite Arme (12) in der erste, scharfen Position der Schlageinrichtung (8) unter einem Winkel α von etwa 15⁰ zur Lotrechten auf die Grundplatte (1) in Richtung der zweiten Position der Schlageinrichtung (8) geneigt ist.

6. Falle nach einem der vorhergehenden Ansprüche 1 bis 5, **dadurch gekennzeichnet, daß** die wippenartige Platte (10) eine in Richtung ihrer Längsachse verlaufende zweite Ausnehmung (29) aufweist, in der ein sich von der oberen Fläche (3) der Grundplatte (1) aufwärts erstreckendes Halterungselement (59) aufgenommen ist, an der sich der zweite Befestigungspunkt (20) der Zugfeder (18) befindet.

7. Falle nach Anspruch 1 bis 6, **dadurch gekennzeichnet, daß** in der zweiten Position der Schlageinrichtung (8) die Falle mit einer Vielzahl identischer Fallen zu einer kompakten Einheit derart stapelbar ist, daß die Grundplatten (1) der gestapelten Fallen parallel zu einander liegen, der erste Arm (12) der Schlageinrichtung (8) jeweils in eine Ausnehmung (41) in der Grundplatte (1) der unmittelbar oberhalb in der kompakten Einheit angeordneten Falle ragt und der Abstand der Grundplatten (1) der gestapelten Fallen zueinander jeweils kleiner als die Höhenabmessung des Schlagteils (16) der Schlageinrichtung (8) bezogen die obere Fläche (3) der Grundplatte (1) in der zweiten Position der Schlageinrichtung (8) ist.

8. Falle nach Anspruch 1 bis 6 mit einem äußeren Gehäuse (42), in das die Falle in eine geschützte Position einsetzbar ist, wobei das Gehäuse (42) mindestens mit einer ersten Öffnung (51) versehen ist, die eine solche Größe aufweist und in der Weise angeordnet ist, daß sie Tieren mit einer gewünschten, maximalen Größe einen Zugang zur Auslöseeinrichtung (10) der Falle ermöglicht, **dadurch gekennzeichnet, daß** das Gehäuse (42) gebildet ist von einer Köderbox mit am Gehäuseboden (43) vorgesehenen Verriegelungselementen (41), die in Arretiernuten (45) an jeder Längskante (5) der Grundplatte (1) und an der zum Freigabeelement (17) benachbarten zweite Stirnkante (46) der Grundplatte (1) der Falle in deren in das Gehäuse (42) eingesetzten Stellung lösbar verriegelnd eingreifen, mit - gesehen im Querschnitt des Gehäuses (42) - derart konisch zum Gehäuseboden (43) verlaufenden Seitenwänden (47), daß ein Durchgang zwischen den Seitenwänden (47) des Gehäuses (33) und den Längsseiten der in letzteres eingesetzten Falle für ein Nagetier wie eine Maus nicht gegeben ist, mit einem an einer Seitenwand (47) des Gehäuses (42) scharniermäßig angelenkten Gehäusedeckel (48), durch den die in das Gehäuse (42) eingesetzte Falle bei Stellung der Schlageinrichtung (8) sowohl in ihrer ersten, scharfen Position, als auch in ihrer zweiten Position (Fangposition) gesichert abdeckbar ist und der durch an der anderen Seitenwand (47) des Gehäuses (42) sowie am Gehäusedeckel (48) vorgesehene, miteinander in Eingriff bringbare Schnappelemente (49) lösbar verschließbar ist, wobei der Gehäuseboden (43) in dem Zugangsbereich, der sich vor der ersten Stirnkante (40) der Grundplatte (1) der in das Gehäuse (42) eingesetzten Falle befindet, mit einer Aussparung (50) derart versehen ist, daß in Einsatzstellung der Falle eine durch die Öffnung (51) in das Gehäuse (42) gelangte Maus im Zugangsbereich auf dem natürlichen Boden des Einsatzortes der Falle in Richtung des den Köder enthaltenen Behältnisses (4) der Grundplatte (1) und somit gezielt auf die Auslöseeinrichtung (10) der Falle weiterlaufen kann.

9. Falle nach Anspruch 8, **dadurch gekennzeichnet, daß** das Gehäuse (42) der Falle mittig durch ein Trennwand (55) in zwei identisch ausgebildete Gehäusehälften (56) unterteilt ist, durch die spiegelbildliche Fixiermöglichkeiten der Falle im Gehäuse (42) gegeben sind.

10. Falle nach Anspruch 8 und 9, **dadurch gekennzeichnet, daß** - gesehen im Querschnitt des Gehäuses (42) der Falle - die Außenfläche (52) einer der zum Gehäuseboden (43) konisch verlaufenden Seitenwände (47) des Gehäuses (42) an ihren beiden längsseitigen Enden (58) vom Gehäuseboden (43) aufwärts bis zu einer solchen Höhe lotrecht zu letzterem und zu ihrer oberen Längskante (54) fluchtend verläuft, daß das Gehäuse (42) an einer Gebäudewand plan mit der entsprechenden Seitenwand (47) des Gehäuses (42) fixierbar ist, und zum anderen das Gehäuse (42) zu Stapelzwecken in identisch ausgebildete Gehäuse (42) einsetzbar ist.

## Claims

1. A trap for small rodents, particularly for mice and rats, with a base plate (1) that is provided with a receptacle (4) for accommodating a bait, with a striking device (8) that is supported on the base plate (1) such that it can be pivoted about a first axis (7), wherein the striking device can be subjected to the force of a tension spring (18) and released from a first, armed position when an animal acts upon a trigger device (10) such that it is pivoted about a second axis (9) supported on the base plate (1) from an idle position into a triggering position, in which a release element (17) that is engaged with the striking device (8) in the first, armed position can be pivoted by the trigger device (10) in such a way that the striking device (8) that can be pivoted about the first axis (7) is released from its first, armed position and the force of the tension spring (18) causes the striking device to instantly swing into a second position, in which it strikes and kills the animal, wherein the striking device (8) extending from the first axis (7) is provided with a first and a second arm (11 and 12), wherein a first mounting point (19) of the tension spring (18) is arranged on the end of the striking device (8) that can be turned by the first axis (7) of the first arm (11), wherein the second mounting point (20) of the tension spring (18) is arranged on the frame (1), wherein the line of force between the two mounting points (19 and 20) of the tension spring (18) extends through or in the vicinity of the first axis (7) when the striking device (8) is situated in its first, armed position, and wherein the trigger device (10) encompasses the opening (31) of the bait receptacle (4) at least in its idle position and the opening (31) of the bait receptacle (4) is freely accessible at least in the triggering position of the trigger device (10),
**characterized in that**
- the trigger device is formed by a plate (10) that can be pivoted about the second axis (9) of the base plate (1) in a rocker-like fashion, namely above the latter, and is arranged parallel to the base plate (1) in its idle position, wherein said plate contains a first recess (29) in the vicinity of its first end (28) which encompasses the opening (31) of the bait receptacle (4) of the base plate (1) such that it is always accessible, and wherein the opposite second end (24) of this plate contains an abutment (27) that extends upward from the upper surface (26) of the plate (10),
- the release element is formed by an elastic driving element (17) that is eccentrically supported on the base plate (1) on a third axis (34) thereof in the vicinity of the second end (24) of the plate (10), namely such that its rotative moment causes the driving element to be prestressed into a home position, in which a collar (35) of the driving element (17) is engaged with the abutment (27) of the plate (10) and the striking device (8) is separably locked on the driving element (17) in its first, armed position, wherein the third axis (34) is arranged between the first end (28) of the rocker-like plate (10) and the first axis (7) and the second mounting point (20) of the tension spring (18) is arranged on the base plate (1) between the second axis (9) and the first end (28) of the plate (10) such that, when the first end (28) of the rocker-like plate (10) is acted upon in the direction toward the base plate (1), the collar (35) of the driving element (17) is acted upon by the abutment (27) of the plate (10) and the eccentrically supported driving element (17) is prestressed opposite to its rotative moment, namely into a position that releases the locked striking device (8) from its first, armed position, wherein the released striking device (8) instantly pivots into its second position due to the force of the tension spring (18), wherein a spring arm (36) of the driving element (17) that is arranged opposite to the collar (35) of the driving element (17) is tensioned in its release position, and wherein the driving element (17) is turned back into its home position due to the spring-back of the spring arm (36).

2. The trap according to Claim 1, **characterized in that** a holding device (33) is preferably provided adjacent to the second end (24) of the rocker-like plate (10) on the second end (32) of the base plate (1) such that it extends upward from the upper surface (3) of said base plate, wherein the third axis (34) for eccentrically supporting the driving element (17) in a pivotable fashion is held on this holding device, and wherein the holding device also contains a limit stop (38) that is contacted by the spring arm (36) of the driving element (17) in its release position and tensions the spring arm due to its spring-back, namely such that the driving element (17) is turned into its home position.

3. The trap according to Claims 1 and 2, **characterized in that** the first, the second and the third axis (7 and 9 and 34) are arranged horizontally referred to the base plate (1) in a parallel fashion, namely above the base plate (1), wherein the first axis (7) is arranged between the second axis and the third axis (9 and 34), and wherein the first and the second axis (7 and 9) lie in one plane while the third axis (34) is situated underneath the latter.

4. The trap according to one of the preceding claims, **characterized in that** wall-like elements (39) originating at the first end (28) of the rocker-like plate (10) are arranged on the base plate (1) such that they respectively extend over approximately one-third of the length of the plate (10), wherein these wall-like elements extend upward from the upper surface (3) of the base plate (1) as far as the plane, in which the upper surface (26) of the rocker-like plate (10) lies in its home position, and wherein the wall-like elements (39) are situated inside the striking device (8) in its second position such that they form a guillotine-like unit for humanely killing the mouse together with the striking device (8) that instantly swings into its second position when a mouse approaches the rocker-like plate (10) from a longitudinal edge (5) of the base plate (1) and thusly acts upon the trigger device (10).

5. The trap according to one of the preceding claims, **characterized in that** the first and the second arms (11 and 12) of the striking device (8) form a right angle, wherein the second arms (12) are inclined relative to the normal of the base plate (1) by an angle α of approximately 15°, namely in the direction of the second position of the striking device (8), in the first, armed position of the striking device.

6. The trap according to one of preceding Claims 1-5, **characterized in that** the rocker-like plate (10) contains a second recess (29) that extends in the direction of its longitudinal axis and in which a holding element (59) is accommodated which extends upward from the upper surface (3) of the base plate (1), wherein the second mounting point (20) of the tension spring (18) is situated on said holding element.

7. The trap according to Claims 1-6, **characterized in that** a plurality of identical traps can be stacked into a compact unit when the striking device (8) of the trap is situated in the second position, **in that** the base plates (1) of the stacked traps lie parallel to one another and the first arm (12) of the striking device (8) is respectively accommodated in a recess (41) in the base plate (1) of the trap lying directly thereon within the compact unit, and **in that** the distance between the base plates (1) of the stacked traps is respectively smaller than the height of the striking part (16) of the striking device (8) referred to the upper surface (3) of the base plate (1) in the second position of the striking device (8).

8. The trap according to Claims 1-6 with an exterior housing, into which the trap can be inserted such that it is arranged in a protected location, wherein the housing (42) is provided with at least a first opening (51), and wherein the size and the arrangement of said opening are chosen such that animals of a desired maximum size are able to gain access to the trigger device (10) of the trap, **characterized in that** the housing (42) is formed by a bait box with locking elements (41) that are arranged on the housing bottom (43) and engage in a separably interlocking fashion into locking grooves (45) on each longitudinal edge (5) of the base plate (1), as well as on the second lateral edge (46) of the base plate (1) of the trap that is situated adjacent to the release element (17), when the trap is inserted into the housing (42), wherein the bait box has--if viewed in the form of a cross section through the housing (42)--side walls (47) that extend conically referred to the housing bottom (43) such that a rodent, e.g., a mouse, is unable to pass between the side walls (47) of the housing (33) and the longitudinal sides of the trap inserted into the latter, with a housing cover (48) that is hinged to one side wall (47) of the housing (2) and securely covers the trap inserted into the housing (42) in the first, armed position as well as the second position (trapping position) of the striking device (8), wherein the housing cover can be removably attached by means of corresponding snap-on elements (49) arranged on the housing cover (48) and on the other side wall (47) of the housing (42), wherein the housing bottom (43) is provided with a recess (50) in the access region that is situated in front of the first front edge (40) of the base plate (1) of the trap inserted into the housing (42) such that a mouse entering the housing (42) through the opening (51) is able to continue walking on the natural ground of the respective trap installation site in this access region, namely in the direction of the base plate (1) with the receptacle (4) containing the bait and consequently in the direction of the trigger device (10) of the trap.

9. The trap according to Claim 8, **characterized in that** the housing (42) of the trap is divided into two identical housing halves (56) by means of a central partition wall (55) such that a mirror arrangement of two identically designed traps can be realized in the housing (42).

10. The trap according to Claims 8 and 9, **characterized in that** the outer surface (52) of one of the side walls (47) of the housing (42) that are arranged conically referred to the housing bottom (43) extends--if viewed in the form of a cross section through the housing (42) of the trap--vertically upward from the housing bottom (43) on both of its longitudinal ends (58) and in alignment with its upper longitudinal edge (54), namely to such a height that the housing (42) can be flatly fixed on a building wall with the corresponding side wall (47) of the housing (42) and the housing (42) can be inserted into identical housings (42) for stacking purposes.

## Revendications

1. Piège à rongeurs, notamment à souris et à rats, comportant un socle (1) muni d'un récipient (4) destiné à recevoir un appât, un système de frappe (8) monté pivotant autour d'un premier axe (7), pouvant être sollicité à l'encontre de l'effet d'un ressort de traction (18) et libéré d'une première position armée, lorsqu'un animal agit sur un système de détente (10) permettant ainsi à celui-ci de pivoter autour d'un deuxième axe (9) monté sur le socle (1) d'une position de repos vers une position de détente dans laquelle un élément de libération (17), qui est en prise avec le système de frappe (8) dans la première position, à savoir dans la position armée de celui-ci, peut être pivoté par le système de détente (10) de telle manière que le système de frappe (8) pivotant autour du premier axe (7) peut être libéré de sa première position dans laquelle il est armé pour pivoter directement, sous l'action exercée par le ressort de traction, vers une seconde position dans laquelle il touche l'animal et le tue, le système de frappe (8), qui s'étend à partir du premier axe (7), étant muni d'un premier et d'un second bras (11, 12), un premier point de fixation (19) du ressort de traction (18) étant prévu à l'extrémité du système de frappe (8) pouvant être tournée par le premier axe (7) du premier bras (11), le second point de fixation (20) du ressort de traction (18) étant prévu sur le socle (1), la ligne de force entre les deux points de fixation (19 et 20) du ressort de traction (18) passant par le premier axe (7) ou à proximité de celui-ci, lorsque le système de frappe (8) se trouve dans sa première position dans laquelle il est armé, et le système de détente (10) comprenant l'ouverture (31) du récipient (4) destiné à recevoir l'appât au moins dans sa position de repos et l'ouverture (31) du récipient (4) étant librement accessible à l'appât au moins dans la position de détente du système de détente (10),
**caractérisé en ce que**
- le système de détente est formé par une plaque (10) qui pivote à la manière d'une bascule autour du deuxième axe (9) du socle (1) au-dessus de celui-ci, qui, dans sa position de repos, est disposée parallèlement au socle (1) et qui présente, à proximité de sa première extrémité (28), un premier évidement (29) comprenant l'ouverture (31) du récipient (4) toujours accessible à l'appât du socle (1) ainsi que, à la seconde extrémité opposée (24), une butée (27) s'étendant de la face supérieure (26) de la plaque (10) vers le haut,
- l'élément de libération étant formé par un élément oscillant élastique (27) qui est monté de manière excentrique et pivotant, sous l'action de son moment d'inertie, autour d'un troisième axe (34) sur le socle (1) à proximité de la seconde extrémité (24) de la plaque (10) vers une position de base dans laquelle un col (35) de l'élément oscillant (17) est en prise avec la butée (27) de la plaque (10) et le système de frappe (8) est bloqué de manière libérable dans sa première position dans laquelle il est armé, le troisième axe (34) étant prévu entre la première extrémité (28) de la plaque (10) pivotant à la manière d'une bascule et le premier axe (7), et le second point de fixation (20) du ressort de traction (18) sur le socle (1) étant prévu entre le deuxième axe (9) et la première extrémité (28) de la plaque (10), de manière que dans le cas d'une action exercée, en direction du socle (1), sur la première extrémité (28) de la plaque (10) pivotant à la manière d'une bascule, le col (35) de l'élément oscillant (17) soit sollicité par la butée (27) de la plaque (10), et l'élément oscillant (17) monté de manière excentrique pivote, à l'encontre de son moment d'inertie, vers une position libérant le blocage du système de frappe (8) dans sa première position armée, le système de frappe (8) libéré pivotant directement dans sa seconde position sous l'action exercée par le ressort de traction (18), un bras élastique (36) de l'élément oscillant (17) opposé au étant armé dans la position de libération de celui-ci et l'élément oscillant (17) retournant vers sa position de base sous l'action du retour élastique du bras élastique (36).

2. Piège selon la revendication 1, **caractérisé en ce que**, dans le voisinage de la seconde extrémité (24) de la plaque (10) pivotant à la manière d'une bascule, un système de maintien (33) est prévu sur la seconde extrémité (32) du socle (1) s'étendant de la face supérieure (3) de celui-ci vers le haut, dans lequel est maintenu le troisième axe (34) sur lequel pivote l'élément oscillant (17) de manière excentrique, et qui présente une butée (38) sur laquelle vient se buter le bras élastique (36) de l'élément oscillant (17) dans la position de libération de celui-ci pour être armé, sous retour élastique, de manière à entraîner un pivotement arrière de l'élément oscillant (17) en direction de sa position de base.

3. Piège selon les revendications 1 et 2, **caractérisé en ce que** les premier, deuxième et troisième axes (7, 9, 34) sont disposés horizontalement par rapport au socle (1) et parallèlement les uns par rapport aux autres au-dessus du socle (1) et **en ce que** le premier axe (7) est prévu entre le deuxième et le troisième axe (9, 34), les premier et le deuxième axe (7, 9) étant situés sur le même plan et le troisième axe (34) étant situé au dessous de ce dernier.

4. Piège selon l'une des revendications précédentes, **caractérisé en ce que**, en partant de la première extrémité (28) de la plaque (10) pivotant à la manière d'une bascule sur le socle (1), des éléments (39) en forme de paroi sont agencés respectivement sur les côtés longs de la plaque (10) sur environ un tiers de la longueur de la plaque (10), qui s'étendent vers le haut depuis la face supérieure (3) du socle (1) jusqu'au plan dans lequel la face supérieure (26) de la plaque (10) se trouve dans sa position de base, et qui se situent, à l'intérieur du système de frappe (8), dans la seconde position de celui-ci, de manière qu'en cas d'escalade par une souris depuis un bord longitudinal (5) du socle (1) vers la plaque (10) et, par conséquent, en cas d'action de la souris sur le système de détente (10), les éléments (39) en forme de paroi forment, ensemble avec le système de frappe (8) qui instantanément pivote vers sa seconde position, une unité de type guillotine pour provoquer la mort de la souris de manière respectueuse de l'animal.

5. Piège selon l'une des revendications précédentes, **caractérisé en ce que** les premier et second bras (11, 12) du système de frappe (8) forment un angle droit et **en ce que** le second bras (12) est incliné, dans la première position armée du système de frappe (8), sous un angle α d'environ 15° par rapport à la verticale sur le socle (1) en direction de la seconde position du système de frappe (8).

6. Piège selon l'une des revendications précédentes, **caractérisé en ce que** la plaque (10) basculante présente un second évidement (29) s'étendant en direction de son axe longitudinal et recevant un élément de maintien (59) s'étendant vers le haut depuis la face supérieure (3) du socle (1), sur lequel se trouve le second point de fixation (20) du ressort de traction (18).

7. Piège selon les revendications 1 à 6, **caractérisé en ce que**, dans la seconde position du système de frappe (8), le piège est empilable pour former une unité compacte avec une pluralité de pièges identiques de manière que les socles (1) des pièges empilés soient placés parallèlement les uns par rapport aux autres, le premier bras (12) du système de frappe (8) faisant saillie respectivement dans un évidement (41) prévu dans le socle (1) du piège disposé immédiatement au-dessus dans l'unité compacte, et la distance entre les socles (1) des pièges empilés étant respectivement plus petite que la hauteur de la barre de frappe (16) du système de frappe (8) par rapport à la face supérieure (3) du socle (1) dans la seconde position du système de frappe (8).

8. Piège selon les revendications 1 à 6, doté d'une boîte (42) dans laquelle le piège peut être placé dans une position protégée, la boîte (42) comportant au moins une première ouverture (51) de dimensions et de disposition telles à permettre à des animaux d'une taille maximale souhaitée d'accéder au système de détente (10) du piège, **caractérisé en ce que** la boîte (42) est formée par une boîte à appât comportant des éléments de verrouillage (41) prévus sur le fond de boîte (43) qui s'engagent de manière amovible dans des encoches d'arrêt (45) ménagées sur chaque bord longitudinal (5) du socle (1) et sur le second bord frontal (46) adjacent à l'élément de libération (17) du socle (1) du piège inséré dans la boîte (42) pour le verrouiller, et, vues en coupe transversale de la boîte (42), des parois latérales (47) disposées de manière conique par rapport au fond de boîte (43) de manière à empêcher le passage d'un rongeur, tel qu'une souris, entre les parois latérales (47) de la boîte (42) et les parois longitudinales du piège inséré dans celle-ci, un couvercle de boîte (48) articulé à la manière d'une charnière sur l'une des parois latérales (47) de la boîte (42) et permettant de couvrir de manière sûre le piège inséré dans la boîte (42), le système pouvant être aussi bien dans sa première position (position armée) que dans sa seconde position (position de capture), et qui peut être fermé de manière détachable moyennant des éléments de fermeture à déclic (49) prévus sur l'autre paroi latérale (47 de la boîte (42) ainsi que sur le couvercle de boîte (48) et pouvant être mis en prise l'un avec l'autre, le fond de boîte (43) étant muni, dans la zone d'accès située devant le premier bord frontal (40) du socle (1) du piège inséré dans la boîte (42), d'un évidement (50) de manière telle qu'en position d'insertion du piège, une souris qui a pénétré dans la boîte (42) par l'ouverture (51) puisse continuer son chemin dans la zone d'accès sur le sol naturel du lieu d'implantation du piège en direction du récipient (4) d'appât du socle et se diriger de manière ciblée vers le système de détente (10).

9. Piège selon la revendication 8, **caractérisé en ce que** la boîte (42) du piège est divisée en son centre en deux moitiés de boîte (56) identiques par une paroi de séparation (55) ce qui offre des possibilités de fixation symétrique du piège dans la boîte (42).

10. Piège selon les revendications 8 et 9, **caractérisé en ce que**, vue en coupe transversale de la boîte (42) du piège, la face extérieure (52) de l'une des parois latérales (47) de la boîte (42) disposée de manière conique par rapport au fond de boîte (43), s'étend, au niveau de ses deux extrémités (58) côté long, verticalement vers le haut depuis le fond de boîte (43), en alignement précis avec son bord longitudinal supérieur (54) jusqu'à une hauteur telle à permettre la fixation plane de la boîte (42) sur un mur d'immeuble au niveau de la paroi latérale (42) correspondante et l'utilisation de la boîte (42) à des fins d'empilage dans des boîtes (42) réalisées de manière identique.
